# EUROPEAN PATENT APPLICATION

(11) **EP 1 790 551 A1**
(43) Date of publication of application: **30.05.2007**
(21) Application number: 05765495.6
(22) Date of filing: 05.07.2005
(51) Int. Cl.: B62D 5/07

(54) **HYDRAULIC DRIVE DEVICE FOR WORKING VEHICLE**

(30) Priority: 13.07.2004 JP 2004206114
(71) Applicant: HITACHI CONSTRUCTION MACHINERY CO., LTD., Bunkyo-ku Tokyo 112-0004 (JP)
(72) Inventor: ITOGA, Kentaro Hitachi C. M. Co., Ltd, Tsuchiura-shi, Ibaraki 300-0013 (JP); NAKAMURA, Tsuyoshi Hitachi C. M.Co., Ltd, Tsuchiura-shi, Ibaraki 300-0013 (JP); NAKAMURA, Kazunori Hitachi C. M. Co., Ltd, Tsuchiura-shi, Ibaraki 300-0013 (JP)
(74) Representative: van Loon, C.J.J.
(86) International application number: PCT/JP2005/012405
(87) International publication number: WO 2006/006448

(57) **Abstract**

**[Object]** To materialize a reduction in pump loss, the assurance of sufficient working device speeds and the priority assurance of an adequate steering capacity with simpler construction and at lower cost than a load sensing system.

**[Means for Achieving the Object]** A hydraulic drive system for a working vehicle is provided with a priority valve for dividing pressure oil, which has been delivered from a variable displacement hydraulic pump, to give oil flow priority to a steering mechanism, plural working device actuators and a steering actuator driven by pressure oil from the priority valve, plural working device control valves for controlling flows of pressure oil to the respective working device actuators, a steering control valve for controlling a flow of pressure oil to the steering actuator, a control stroke detection means for detecting control strokes for the working device control valves, and a pump flow-rate control means for controlling a flow rate of the variable displacement hydraulic pump on the basis of a detection output from the control stroke detection means.

## Description

### Technical Field

This invention relates to a hydraulic drive system for a working vehicle (loading vehicle) such as a wheel loader, and especially to a technology for hydraulic drive systems each constructed including a priority valve that gives oil flow priority to a steering mechanism.

### Background Art

A hydraulic drive system for a working vehicle such as a wheel loader generally has a construction that an engine (motor) is arranged as a drive force source and a fixed displacement hydraulic pump for working devices and a fixed displacement hydraulic pump for a steering mechanism are connected to the engine.

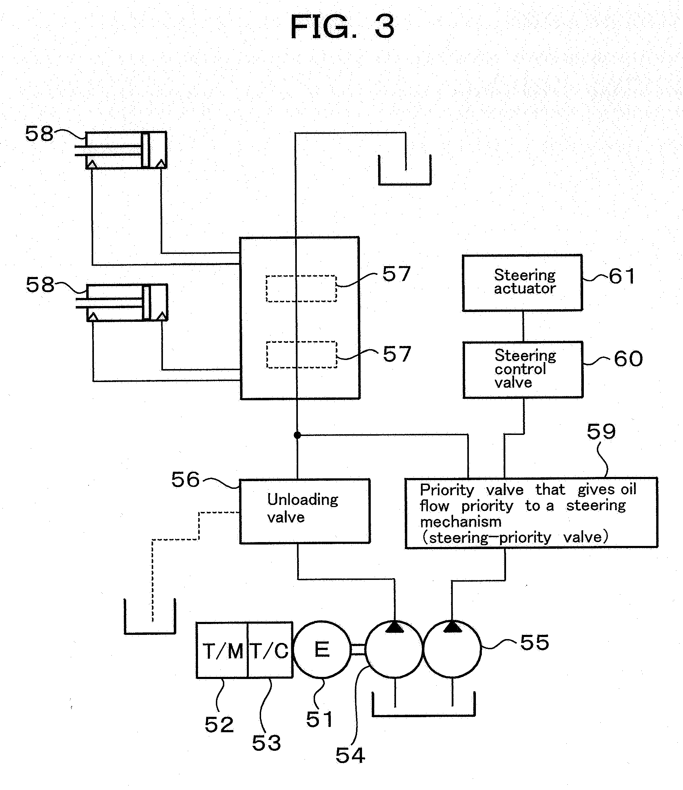

FIG. 3 is a hydraulic circuit diagram illustrating a conventional hydraulic drive system for a wheel loader. In FIG. 3, there are shown an engine 51, a transmission 52 connected to the engine 51 via a torque converter 53, a fixed displacement hydraulic pump 54 for working devices, said fixed displacement hydraulic pump 54 being connected to the engine 51, a fixed displacement hydraulic pump 55 for a steering mechanism, said fixed displacement hydraulic pump 55 being connected to the engine 51, an unloading valve 56 connected to a delivery side of the hydraulic pump 54 for the working devices, plural center bypass control valves (directional control valves) 57 for the working devices, said control valves 57 being connected to a downstream side of the unloading valve 56, plural working device actuators 58 drivable under control by the respective working device control valves 57, a priority valve (steering-priority valve) 59 connected to a delivery side of the hydraulic pump 55 for the steering mechanism to give oil flow priority to the steeringmechanism, a steering control valve 60 connected to a priority output port of the priority valve 59, and a steering actuator 61 drivable under control by the steering control valve 60. A non-priority output port of the priority valve 59 is connected to an upstream side of the plural working device control valves 57.

In the construction illustrated in FIG. 3, a hydraulic circuit for the working devices is provided with the unloading valve 56 so that during digging, force can be transmitted from the side of the working devices to the side of a travel circuit to improve the working performance and during light work, sufficient working device speeds can be assured. Pressure oil from the hydraulic pump 54 for the working devices flows to the working device control valve 57 and working device actuators 58 via the unloading valve 56. A portion of pressure oil from the hydraulic pump 55 for the steering mechanism, on the other hand, is allowed to flow at a flow rate, which is required for the steering mechanism, to the steering actuator 61 via the steering control valve 60, and the remaining portion of the pressure oil is allowed to flow to the side of the working devices to assure a sufficient flow rate for the side of the working devices. In other words, the sum of a flow rate from the hydraulic pump 54 for the working devices and a flow rate from the hydraulic pump 55 for the steering mechanism, the latter flow rate being other than that required for steering, corresponds to a maximum total speed of the working devices.

It is to be noted that a wheel loader is a working vehicle which also performs lots of traveling. During traveling that the working devices are not operated, pressure oil from the hydraulic pump 54 for the working devices and that from the hydraulic pump 55 for the steering mechanism are entirely drained as a loss to a reservoir. In other words, even during traveling that the working devices are not operated, loads are applied from the pumps 54, 55 to the engine 51, resulting in a power loss.

There is, accordingly, a known technology that reduces a power loss by unloading a hydraulic pump for working devices during high-speed traveling (see Patent Document 1).

As a system for reducing a pump load during traveling that working devices are not operated, a load sensing system making use of a variable displacement pump is known (see Patent Document 2). According to this load sensing system, the displacement of a variable displacement pump is controlled such that differences in pressure across a steering control valve and a working device control valve, specifically a difference between a control valve inlet pressure (pump pressure) and a control valve outlet pressure (load sensing pressure) becomes constant, and as a result, the pump pressure is maintained higher by a predetermined target value than the load sensing pressure. The term "load sensing pressure" as used above means a high-pressure-side pressure as selected by a shuttle valve from a load pressure on the steering control valve and a load pressure on the working device control valve.

In a system that performs load sensing control, the swash angle of a pump is controlled as described above, that is, such that the delivery rate from the pump remains equal to a total flow rate required for a steering mechanism and a working device and no superfluous pressure oil is delivered. An improvement in fuel economy can hence be attained. Under the load sensing control, the load pressure on the working device drops to a low pressure during traveling that the working device is not operated, and therefore, the delivery rate from the pump is controlled at a lowest flow rate.
Patent Document 1: JP-A-2000-190858
Patent Document 2: JP-A-2002-106504

### Disclosure of the Invention

### Means for Solving the Problems

However, pressure oil of a volume corresponding to the capacity of the pump and a pressure loss through the unloading valve become a pump loss when the hydraulic pump for the working device is simply unloaded as in the conventional technology disclosed in Patent Document 1.

It maybe contemplated to reduce the pump loss by making smaller the capacity of the hydraulic pump for the steering mechanism. However, this approach involves a problem in that no sufficient flow rate maybe produced for the operation of the steering mechanism to result in a slow steering operation, and accordingly, develops a problem from the standpoint of practical utility. The capacity of the hydraulic pump for the steeringmechanismmust be set greater than pump capacities required for the steering mechanism.

In addition, any attempt to achieve a reduction in the flow rate from the pump by load sensing control requires valves, such as pressure compensating valves and shuttle valves, for the actuators of individual working devices. Accordingly, such an attempt leads to an increase in manufacturing cost, and moreover, involves a problem that the structure becomes complex.

With the foregoing problems in view, an object of the present invention is, in a hydraulic drive system having a variable displacement hydraulic pump useful in driving working devices and also in driving a steering mechanism, to realize with a simpler construction and at lower cost than a load sensing system a decrease in a flow rate from the pump and a reduction in a pump loss during traveling that working devices are not operated; and also an increase in a flow rate from the pump, the assurance of sufficient speeds for the working devices and the priority assurance of an adequate pump capacity for the steering mechanismwhile the working devices are operated.

### Means for Solving the Problems

To achieve the above-described object, a hydraulic drive system for a working vehicle, said hydraulic drive systembeing provided with a variable displacement hydraulic pump drivable by a motor to drive working devices and a steering mechanism, a priority valve for dividing pressure oil, which has been delivered from the variable displacement hydraulic pump, to give oil flow priority to the steering mechanism, plural working device actuators and a steering actuator driven by pressure oil from the priority valve, plural working device control valves for controlling flows of pressure oil to the respective working device actuators, and a steering control valve for controlling a flow of pressure oil to the steering actuator, takes a construction that in a representative aspect of the present invention, the hydraulic drive system comprises a control stroke detection means for detecting control strokes for at least the working device control valves, and a pump flow-rate control means for controlling a flow rate of the variable displacement hydraulic pump on the basis of a detection output from the control stroke detection means.

### Advantageous Effects of the Invention

According to the present invention, the delivery flow rate from the variable displacement hydraulic pump is controlled corresponding to the amounts of switching control (total control strokes) of the working device control valves. Described specifically, when the control strokes for the working device control valves are zero as in the traveling that the working devices are not operated, the flow rate from the variable displacement hydraulic pump is reduced to a minimum so that the pump loss can be reduced. During the operation of the working devices, on the other hand, the control strokes for the working device control valves are increased, and corresponding to the increased control strokes, the flow rate from the variable displacement hydraulic pump is increased. This makes it possible to assure sufficient speeds for the working devices. During an operation of the steering mechanism, on the other hand, a flow rate required for the steeringmechanism can be assured with priority by the priority valve. Further, the detection of the amounts of switching control (control strokes) for the working device control valves can be performed by a restrictor arranged, for example, in a center bypass line for plural center bypass working device control valves at a position downstream of the plural working device control valves, and by the restrictor, a reverse proportional control pressure can be fed to the pump flow-rate control means. The hydraulic drive system according to the present invention can, therefore, be realized by simple construction at low cost.

### Best Modes for Carrying out the Invention

Embodiments of the present invention will hereinafter be described with reference to drawings.

### <First Embodiment>

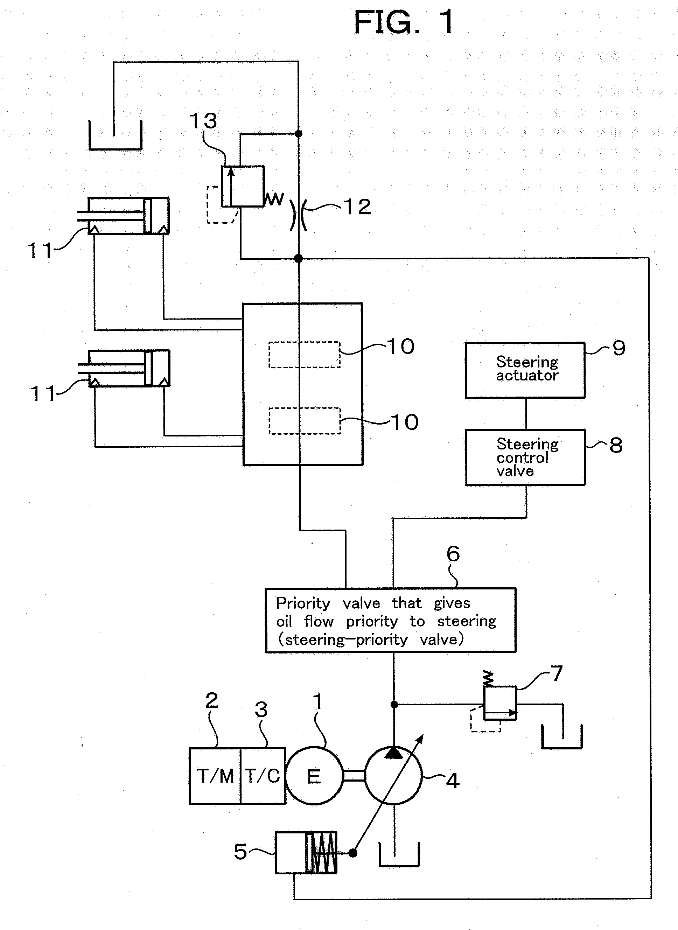

FIG. 1 is a hydraulic circuit diagram illustrating a hydraulic drive system according to a first embodiment of the present invention for a wheel loader.

In FIG. 1, there are shown an engine (motor) 1, a transmission 2 connected to the engine 1 via a torque converter 3, a variable displacement hydraulic pump 4 connected to the engine 1 to be used in driving working devices and also in driving of a steering mechanism, a flow rate control means (pump flow-rate control means) 5 for changing a displacement of the variable displacement hydraulic pump 4 to perform control on a delivery flow rate from the variable displacement hydraulic pump 4, a priority valve (steering-priority valve) 6 connected to a delivery side of the variable displacement hydraulic pump 4 to give oil flow priority to the steering mechanism, a relief valve 7 for performing control such that a delivery pressure from the variable displacement hydraulic pump 4 does not exceed a specified pressure, a steering control valve (pilot-operated directional control valve for controlling a flow rate and a direction) 8 connected to a priority output port of the priority valve 6, a steering actuator 9 drivable under control by the steering control valve 8, plural center-bypass working-device control valves (pilot-operated directional control valves for controlling flow rates and directions) 10 connected to a non-priority output port of the priority valve 6, plural working device actuators 11 drivable under control by the respective working device control valves 9, a restrictor 12 arranged in a center bypass line for the plural working device control valves 10 at a position downstream of the plural working-device control valves 10 to feed a negative control pressure as an inverse proportional control pressure to the pump flow rate control means 5, and a relief valve 13 connected in parallel with the restrictor 12 to limit such that the negative control pressure produced at the restrictor 12 does not exceed a specified pressure.

In the construction illustrated in FIG. 1, pressure oil delivered from the variable displacement hydraulic pump 4 driven by the engine 1 flows to the priority valve 6. As known to the public, the priority valve 6 that gives oil flow priority to the steering mechanism is a valve which serves to divide the pressure oil to a hydraulic circuit for the steering mechanism and a hydraulic circuit for the working devices with a priority given to the hydraulic circuit for the steering mechanism. When a steering operation is performed, the priority valve 6 allows the pressure oil to flow at a flow rate, which is required for the steering operation, to the hydraulic circuit for the steering mechanism, and allows the remaining pressure oil to the hydraulic circuit for the working devices. When no steering operation is performed, the priority valve 6 is designed to allow the pressure oil to flow in its entirety to the hydraulic circuit for the working devices.

The individual center-bypass working-device control valves (individual directional control valves) 10 are pilot-operated valves, and perform control such that, when the-individual working-device control valves 10 are in their neutral positions (when the working devices are not operated), the flow rate of pressure oil which passes through the center bypass line becomes maximum, and at the same time, the negative control pressure also becomes maximum and the flow rate (delivery flow rate) from the variable displacement hydraulic pump 4 becomes minimum by the pump flow rate control means 5 controlled by the negative control pressure. Further, the negative control pressure progressively drops as the amount of switching control (control stroke) for the working-device control valve 10 is increased. As a consequence, the flow rate from the variable displacement hydraulic pump 4 is controlled to progressively increase by the pump flow rate control means 5. When the amount of switching control for the working-device control valve 10 becomes maximum (reaches a full stroke), the center bypass line is cut off and no negative control pressure is produced any longer (the negative control pressure drops to zero). Accordingly, the flow rate from the variable displacement hydraulic pump 4 is controlled to become maximum by the pump flow rate control means 5.

Therefore, the hydraulic drive system is designed such that during actuations (operations) of the working devices, the feeding of pressure oil at an adequate flow rate to the hydraulic circuit for the working devices can be assured corresponding to the amounts of switching control for the working-device control valves 10, that during non-operations of the working devices (for example, during traveling without operation of the working devices), the flow rate from the variable displacement hydraulic pump 4 can be controlled minimum, and therefore, that a reduction in fuel economy can be achieved.

When a steering operation is performed while the flow rate from the variable displacement hydraulic pump 4 is minimum (when the working devices are not operated), a flow rate required for the steering mechanism is assured by the priority valve 6. As a result, the flow rate from the variable displacement hydraulic pump 4 is controlled by the pump flow rate control means 5 such that the flow rate of pressure oil flowing through the center bypass line is reduced to feed pressure oil to the hydraulic circuit for the steering mechanism at the flow rate required for the steering mechanism.

As has been described above, the first embodiment can reduce a pump loss by controlling the delivery flow rate from the variable displacement hydraulic pump 4 in accordance with the amounts of switching control (control strokes) for the working-device control valves 10, specifically by minimizing the flow rate from the variable displacement hydraulic pump 4 when the amounts of switching control for the working-device control valves 10 are zero as at the time of traveling without operation of the working devices. Because the amounts of switching control for the working-device control valves 10 are increased upon operating the working devices, sufficient speeds can be assured for the working devices by increasing the flow rate from the variable displacement hydraulic pump 4 in accordance with the amounts of the switching control. Upon steering operation, on the other hand, the flow rate required for the steering mechanism can be assured with priority by the priority valve 6. The hydraulic drive system is also constructed such that the detection of amounts of switching control (control strokes) for the working-device control valves 10 is performed by the restrictor 12 arranged in the center bypass line for the plural center bypass working-device control valves 10 at the position downstream of the control valves 10 and an inverse control pressure is fed to the pump flow-rate control means 5 by the restrictor 12. It is, therefore, only necessary to add the restrictor 12 and relieve valve 13 both of which are of simple constructions. Compared with the load sensing system described above in the Background Art, the hydraulic drive system of the first embodiment can be realized with a far simpler construction and accordingly, at lower cost.

### <Second Embodiment>

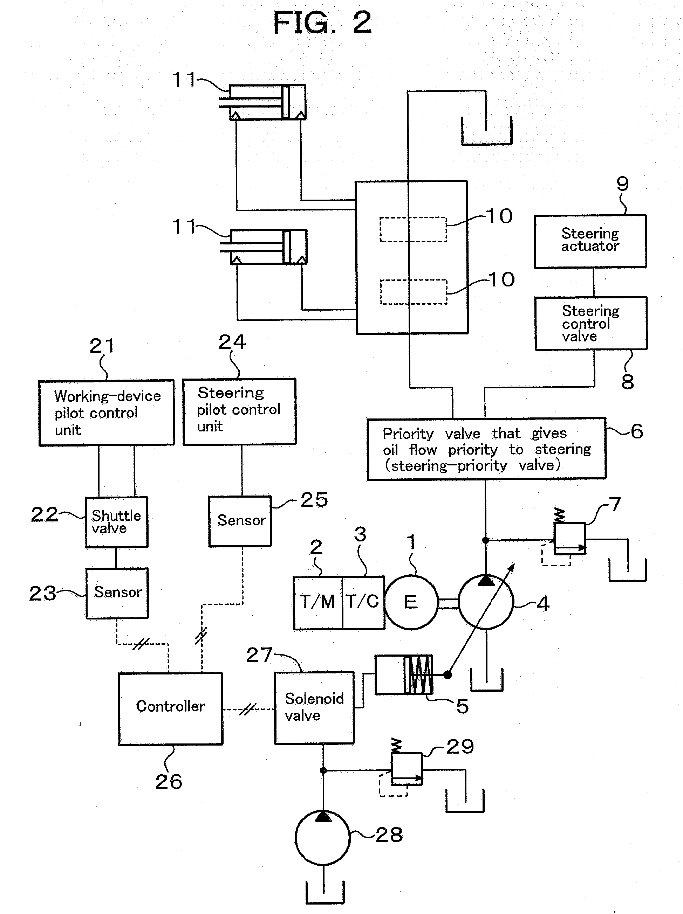

FIG. 2 is a circuit diagram illustrating a hydraulic drive system according to a second embodiment of the present invention for a wheel loader. In FIG. 2, those elements of structure which are the same as the corresponding elements of structure in the first embodiment illustrated in FIG. 1 are designated by the same reference numerals, and their description is omitted to avoid repetitions.

In FIG. 2, there are shown a working-device pilot control unit 21 for outputting pilot pressures to actuate the above-described, pilot-operated, working-device control valves (directional control valves) 10, a shuttle valve 22 for selecting and outputting the highest one of the pilot pressures which actuate the respective working-device control valves 10, a sensor 23 for sensing and outputting an output pressure from the shuttle valve 22, a steering pilot control unit 24 for outputting a pilot pressure to actuate the above-described, pilot-operated, steering control valve 8, a sensor 25 for sensing the pilot pressure, which actuates the steering control valve 8, converting it into an electric signal and outputting the electric signal, a controller 26 for receiving the output from the sensor 23 and the output from the sensor 25 to administer supervisory control of the entire wheel loader, a solenoid valve 27 for being actuated by an instruction signal from the controller 26 to drive under control he pump flow-rate control means 5, a hydraulic pump 28 for feeding pressure oil to the solenoid valve 27, and a relief valve 29 for performing control such that a delivery pressure from the hydraulic pump 28 does not exceed a specified pressure.

The pilot pressures (control pilot pressures) for actuating the working-device control valves 10 correspond to the amounts of switching control (control strokes) for the working-device control valves 10. While the working devices are not operated (for example, during traveling without operation of the working devices), no pilot pressures are produced (the pilot pressures become zero). The controller 26, which has recognized the non-operation of the working devices from the output signals from the sensor 22, controls the pump flow-rate control means 5 via the solenoid valve 27 such that the flow rate (delivery flow rate) form the variable displacement hydraulic pump 4 becomes minimum. Because the pilot pressures for actuating the working-device control valves 10 progressively increase with the amounts of switching control (control strokes) for the working-device control valves 10, the controller 26 which has recognized the increased pilot pressures on the basis of the output signals from the sensor 22, controls the solenoid valve such that the flow rate from the variable displacement hydraulic pump 4 progressively increases. When the amounts of switching control for the working-device control valves 10 become maximum (reach full strokes), the pilot pressures for actuating the working-device control valves 10 take maximum values. The controller 26, which has hence recognized the maximum amounts of switching controls on the basis of output signals from the sensor 22, controls the solenoid valve such that the flow rate from the variable displacement hydraulic pump 4 becomes maximum. As in the above-described first embodiment, during actuation (operation) of the working devices, the feeding of pressure oil at an adequate flow rate to the hydraulic circuit for the working devices is assured corresponding to the amounts of switching control for the working-device control valves 10, and during non-operation of the working devices (for example, during traveling without actuation of the working devices), the flow rate from the variable displacement hydraulic pump 4 can be controlledminimum. It is, therefore, possible to achieve a reduction in fuel economy.

On the other hand, the pilot pressure (control pilot pressure) for actuating the steering control valve 8 corresponds to the amount of switching control (control stroke) for the steering control valve 8. During non-operation of the steering mechanism, no pilot pressure is produced (the pilot pressure becomes zero). The controller 26, which has recognized the non-operation of the steering mechanism on the basis of the output signal from the sensor 25, controls the pump flow-rate control means 5 via the solenoid valve 27 such that the flow rate (delivery flow rate) from the variable displacement hydraulic pump 4 becomes minimum. When a steering operation is performed, the pilot pressure for actuating the steering control valve 8 rises corresponding to the amount of the control for the steering operation. The controller 26, which has recognized the steering operation on the basis of the output signal from the sensor 25, therefore controls the solenoid valve such that the flow rate from the variable displacement hydraulic pump 4 is increased to assure a flow rate required for the steering mechanism.

In the second embodiment which has such a construction as mentioned above and performs such control operations as mentioned above, it is possible, as in the above-described first embodiment, to reduce a pump loss while traveling without operation of the working devices and also to always assure a flow rate needed for the steering mechanism. Moreover, the flow rate (delivery flow rate) from the pump can also be minimized when no steering operation is performed. The hydraulic drive system can, therefore, be used as an efficient system. In addition, the hydraulic drive system according to the second embodiment can be realized with a relatively simple construction compared with the load sensing system mentioned above in the Background Art.

In the above-described second embodiment, it is designed to control the pump flow-rate control means 5 by the solenoid valve 27. As an alternative, it is also possible to arrange a solenoid valve as the pump flow-rate control means 5 and to directly control the solenoid valve by the controller 26. In the above-mentioned second embodiment, the detection of the maximum one of pilot pressures which actuate the respective working-device control valves 10 is performed by the shuttle valve 22. As an alternative, it is also possible to arrange plural sensors for individually sensing pilot pressures, which actuate the respective working-device control valves 10, and to perform by the controller 26 the determination of the maximum one of the pilot pressures which actuate the respective working-device control valves 10.

### Brief Description of the Drawings

[FIG. 1] A hydraulic diagram showing a hydraulic drive system according to a first embodiment of the present invention for a wheel loader.
[FIG. 2] A hydraulic diagram showing a hydraulic drive system according to a second embodiment of the present invention for a wheel loader.
[FIG. 3] A hydraulic diagram showing a hydraulic drive system according to a conventional technology for a wheel loader.

### Legend

- 1: Engine
- 2: Transmission
- 3: Torque converter
- 4: Variable displacement hydraulic pump
- 5: Pump flow-rate control means
- 6: Priority valve that gives oil flow priority to a steering mechanism (steering-priority valve)
- 7: Relief valve
- 8: Steering control valve
- 9: Steering actuator
- 10: Center bypass working-device control valves
- 11: Working device actuators
- 12: Restrictor
- 13: Relief valve
- 21: Working-device pilot control unit
- 22: Shuttle valve
- 23: Sensor
- 24: Steering pilot control unit
- 25: Sensor
- 26: Controller
- 27: Solenoid valve
- 28: Hydraulic pump
- 29: Relief valve

## Claims

1. A hydraulic drive system for a working vehicle, said hydraulic drive system being provided with a variable displacement hydraulic pump drivable by a motor to drive working devices and a steering mechanism, a priority valve for dividing pressure oil, which has been delivered from said variable displacement hydraulic pump, to give oil flow priority to the steering mechanism, plural working device actuators and a steering actuator driven by pressure oil from said priority valve, plural working device control valves for controlling flows of pressure oil to said respective working device actuators, and a steering control valve for controlling a flow of pressure oil to said steering actuator, wherein:
said hydraulic drive system comprises a control stroke detection means for detecting control strokes for at least said working device control valves, and a pump flow-rate control means for controlling a flow rate of said variable displacement hydraulic pump on a basis of a detection output from said control stroke detection means.

2. Ahydraulic drive system according to claim 1, wherein:
said plural working device control valves are center bypass control valves, and said control stroke detection means comprises a restrictor arranged in a center bypass line for said plural working device control valves at a position downstream of said plural working device control valves to feed a reverse proportional control pressure to said pump flow-rate control means.

3. A hydraulic drive system according to claim 1, wherein:
said control stroke detection means comprises a first detection means for detecting a maximum one of control strokes for said respective working device control valves and a second detection means for detecting a control stroke for said steering control valve, and a controller for performing control on said pump flow-rate control means on a basis of a detection output from said first detection means and a detection output form said second detection means.
